# EUROPEAN PATENT APPLICATION

(11) **EP 4 365 471 A1**
(43) Date of publication of application: **08.05.2024**
(21) Application number: 23206342.0
(22) Date of filing: 27.10.2023
(51) Int. Cl.: F16L 7/00, F16L 9/00, F16L 9/12, F16L 9/19, F16L 9/22, F16L 13/02, F16L 41/02, F16L 43/00, F16L 55/07, F16L 55/11

(54) **DUCT FOR TRANSPORTING FLUIDS, PARTICULARLY FOR TOXIC SUBSTANCES AND/OR ACIDS**

(30) Priority: 03.11.2022 IT 202200004494 U
(71) Applicant: Plastek S.r.l., 45010 Villadose (RO) (IT)
(72) Inventor: CHIARION, Luca, 45010 GAVELLO RO (IT)
(74) Representative: Modiano, Micaela Nadia

(57) **Abstract**

A duct (10) for transporting fluids, particularly for toxic substances and/or acids, comprising a plurality of first pipes (11) enclosed within a single tubular element (12).

## Description

The present invention relates to a duct for transporting fluids.

The invention is used in the industrial sector particularly in the field of piping for transporting toxic substances and/or hazardous acids.

The invention can be used, for example, in the field of industries for the production of chemical or pharmaceutical products.

The invention can also be used in other fields such as, for example, the hospital sector.

Currently, so-called double-containment pipes are usually used for the transport of chemical substances that are potentially harmful and/or lethal to humans, such as toxic substances and acids; said pipes comprise:
- a first, inner layer, in contact with the substance to be transported,
- a second, outer layer, surrounding the first layer.

The second layer is adapted to protect the surrounding environment, should the first layer break/deteriorate, preventing the dispersion of the substance contained within it.

This background art has some drawbacks.

In fact, double-containment pipes are considerably expensive. Moreover, if the first layer breaks, the maintainer must:
- remove the second layer,
- repair the first layer at the rupture,
- restore the second layer to protect the repaired first layer.

This results in time-consuming, inconvenient and expensive repair operations.

Moreover, it is not always easy to locate the exact point of rupture of the first layer from the outside, and it is therefore necessary to remove considerable amounts of the second layer to get to the rupture point, with considerable waste of material.

Furthermore, after the first layer is repaired, it frequently happens that the second layer is not restored, generating a hazardous and dangerous situation for the surrounding environment.

The aim of the present invention is to provide a duct for fluid transport that is capable of improving the background art in one or more of the above aspects.

Within this aim, an object of the invention is to provide a duct for the transport of fluids that allows easier and faster repair of the layer in contact with the fluid, in the event of ruptures, than similar ducts of the known type.

Another object of the invention is to provide a duct for transporting fluids that allows faster and easier detection of the rupture point of the layer in contact with the fluid, with respect to similar ducts of the known type.

A further object of the invention is to provide a duct for transporting fluids that allows, in case of ruptures, easy and quick restoration of the outer layer, after repair of the inner layer, in contact with the fluid.

A further object of the present invention is to overcome the drawbacks of the background art in a manner that is alternative to any existing solutions.

Not least object of the invention is to provide a duct for transporting fluids that is high reliable, relatively easy to provide, and at competitive costs.

This aim, as well as these and other objects which will become better apparent hereinafter, are achieved by a duct for transporting fluids, particularly for toxic substances and/or acids, characterized in that it comprises a plurality of first pipes enclosed within a single tubular element.

Further characteristics and advantages of the invention will become better apparent from the description of a preferred but not exclusive embodiment of the duct for transporting fluids, according to the invention, illustrated by way of non-limiting example in the accompanying drawings, wherein:

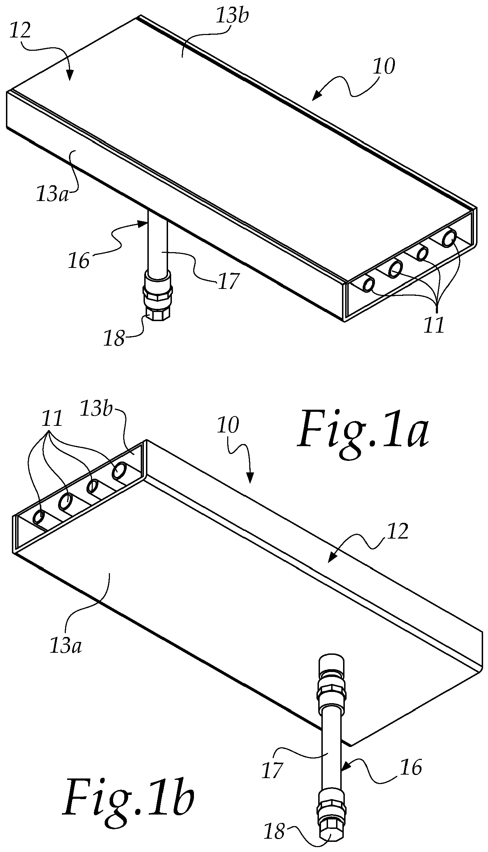

Figures 1a and 1b are each a perspective view of a portion of a duct for transporting fluids, according to the invention;

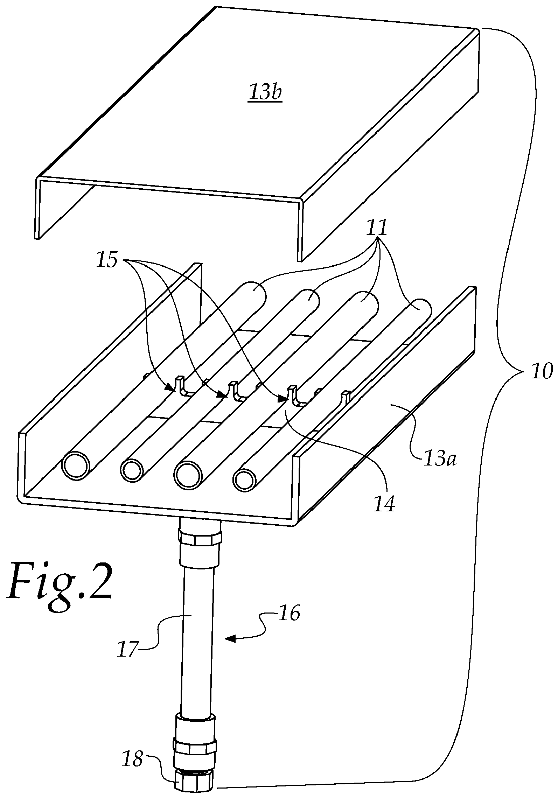

Figure 2 is an exploded view of the duct portion of Figures 1a and 1b;
Figure 3 is an exploded view of a first detail of a duct for transporting fluids according to the invention;
Figure 4 is an exploded view of a second detail of a duct for transporting fluids according to the invention.

With reference to the figures, a duct for transporting fluids, according to the invention, is generally designated by the reference numeral 10.

One of the particularities of the duct 10 resides in that it comprises a plurality of first pipes 11 enclosed within a single tubular element 12.

The first pipes 11 are internally in contact with the fluid they transport, while the tubular element 12 is a protection for the surrounding environment in the event of a rupture of one or more of the first pipes 11, with consequent leakage of the fluid.

The first pipes 11 and the tubular element 12 are made of plastic material, preferably high-density polyethylene (HDPE).

In particular, the tubular element 12 has a quadrangular profile and comprises at least two complementary conduits, 13a and 13b, respectively, with a C-shaped cross section and an inverted configuration with respect to each other.

Advantageously, said conduits comprise:
- a first conduit 13a,
- a second conduit 13b, interlocked in the first conduit 13a.

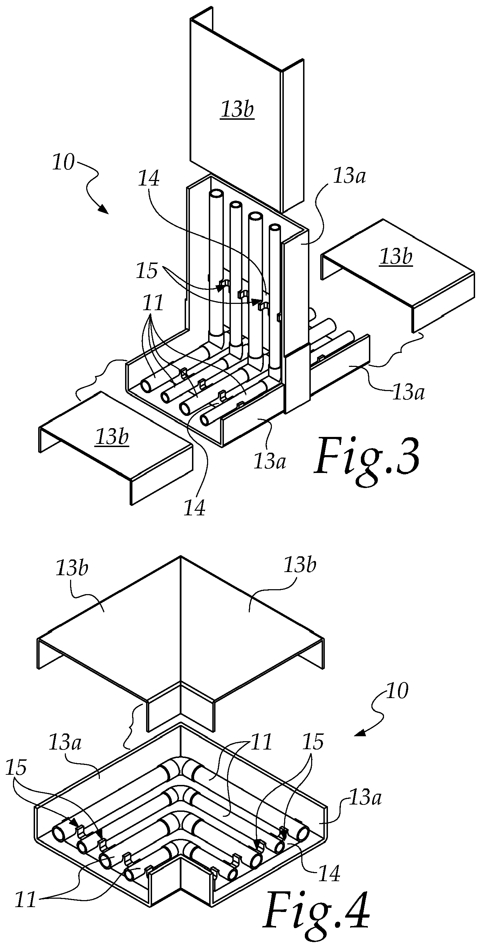

With particular reference to Figures 3 and 4, the tubular element 12 may have a branch, for example a T-shaped one like the one shown in Figure 3, and/or a bend, like the one shown in Figure 4.

In such cases, the tubular element 12 comprises a plurality of mutually blended first conduits 13a and a plurality of second conduits 13b, each corresponding to one of the first conduits 13a.

In particular, the first conduits 13a are mutually welded by means of a butt weld to ensure perfect tightness of the components.

It should be noted that in case of rupture of a pipe 11 it is sufficient to remove the second conduit 13b from the corresponding first conduit 13a to repair the pipe 11.

It is then possible to restore the protective tubular element 12 easily by repositioning the second conduit 13b inside the first conduit 13a so as to enclose the first pipes 11.

The duct 10 comprises one or more elements 14 for anchoring the first pipes 11.

Such anchoring elements 14 are constituted by partitions associated with the first conduits 13a.

Such partitions are:
- arranged transversely with respect to the direction of extension of the first pipes 11,
- provided with a plurality of clips 15 which are shaped complementarily to the first pipes 11.

Such anchoring elements 14 are adapted to prevent movements of the first pipes 11 during fluid transport.

Another particularity of the invention resides in that the duct 10 comprises means 16 for detecting the rupture of the first pipes 11 and/or fluid leaks.

Such means 16 for detecting the rupture of the first pipes 11 and/or fluid leaks comprise one or more second pipes 17 in fluidic connection with the tubular element 12.

In particular, the one or more second pipes 17 are associated with a corresponding first conduit 13a and have a vertical arrangement in use.

The second pipes 17 are made of transparent plastic material such as, for example, polyvinyl chloride (PVC).

In the event of ruptures of one of the first pipes 11, the fluid escapes from the latter and, by gravity, descends into one of the second pipes 17.

At this point, since the second pipes 17 are transparent, the operator can easily detect the rupture and identify the exact spot where to go to intervene for repair.

Advantageously, each of the second pipes 17 is closed in a lower region by a plug 18.

In this way, removal of the cap 18 allows, once the main flow of fluid has been shut off, to drain the line safely by means of suitable personal protective equipment and to intervene quickly and easily for subsequent repairs.

In practice it has been found that the invention achieves the intended aim and objects, providing a duct for transporting fluids that allows easier and faster repair of the layer in contact with the fluid, in case of ruptures, than similar ducts of the known type.

According to the invention, a duct for transporting fluids has been provided which allows faster and easier identification of the rupture point of the layer in contact with the fluid with respect to similar ducts of the known type.

Moreover, according to the invention, a duct for transporting fluids has been provided which allows, in case of ruptures, easy and quick restoration of the outer layer, after repairing the inner layer, in contact with the fluid.

The invention thus conceived is susceptible of numerous modifications and variations, all of which are within the scope of the accompanying claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Utility Model Patent Application no. 202022000004494, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A duct (10) for transporting fluids, particularly for toxic substances and/or acids, **characterized in that** it comprises a plurality of first pipes (11) enclosed within a single tubular element (12).

2. The duct (10) according to claim 1, **characterized in that** said first pipes (11) and said tubular element (12) are made of plastic material.

3. The duct (10) according to one or more of the preceding claims, **characterized in that** said first pipes (11) and said tubular element (12) are made of HDPE.

4. The duct (10) according to one or more of the preceding claims, **characterized in that** said tubular element (12) has a quadrangular profile and comprises at least two complementary conduits (13a, 13b) having a C-shaped cross-section and a mutually inverted configuration.

5. The duct (10) according to the preceding claim, **characterized in that** said at least two conduits (13a, 13b) comprise:
- one or more first conduits (13a),
- one or more second conduits (13b), said one or more second conduits (13b) being each interlocked in a corresponding one of said one or more first conduits (13a).

6. The duct (10) according to one or more of the preceding claims, **characterized in that** said tubular element (12) has a branch and/or bend.

7. The duct (10) according to one or more of the preceding claims, **characterized in that** said tubular element (12) comprises a plurality of first conduits (13a), which are mutually connected, and a plurality of second conduits (13b), each corresponding to one of said first conduits (13a).

8. The duct (10) according to one or more of the preceding claims, **characterized in that** it comprises one or more elements (14) for anchoring said first pipes (11).

9. The duct (10) according to one or more of the preceding claims, **characterized in that** said anchoring elements (14) are constituted by partitions associated with said one or more first conduits (13a).

10. The duct (10) according to one or more of the preceding claims, **characterized in that** said partitions are:
- arranged transversely with respect to the direction of extension of said first pipes (11),
- provided with a plurality of clips (15), said clips (15) being complementarily shaped with respect to said first pipes (11).

11. The duct (10) according to one or more of the preceding claims, **characterized in that** it comprises means (16) for detecting the rupture of said first pipes (11) and/or fluid leaks.

12. The duct (10) according to one or more of the preceding claims, **characterized in that** said means (16) for detecting the rupture of said first pipes (11) and/or fluid leaks comprising one or more second pipes (17) in fluidic connection with said tubular element (12).

13. The duct (10) according to claim 12, **characterized in that** said one or more second pipes (17):
- are associated with a corresponding one of said one or more first conduits (13a),
- have a vertical arrangement in use,
- are made of transparent plastic material.

14. The duct (10) according to claim 12 or 13, **characterized in that** each of said second pipes (17) is closed in a downward region by a plug (18).
